(19) Europäisches Patentamt
European Patent Office
Office européen des brevets

(11) **EP 3 023 826 A1**

(12) **EUROPEAN PATENT APPLICATION**

(43) Date of publication:
**25.05.2016 Bulletin 2016/21**

(51) Int Cl.:
***G02B 27/00*** (2006.01)   ***G02B 13/16*** (2006.01)
***G02B 3/00*** (2006.01)   ***H04N 5/232*** (2006.01)

(21) Application number: **14306851.8**

(22) Date of filing: **20.11.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Thomson Licensing
92130 Issy-les-Moulineaux (FR)**

(72) Inventor: **Vandame, Benoit
35576 Cesson Sévigné (FR)**

(74) Representative: **Browaeys, Jean-Philippe
Technicolor
1, rue Jeanne d'Arc
92443 Issy-les-Moulineaux (FR)**

(54) **Light field imaging device**

(57)    A light field imaging device comprising: an array of micro lenses arranged in a regular lattice structure, a photosensor configured to capture light projected on the photosensor from the array of micro lenses, the photosensor comprising sets of pixels, each set of pixels being optically associated with a respective micro-lens of the array of micro lenses; wherein pixels of at least one set of pixels are each shifted by a common displacement with respect to the regular lattice structure, the common displacement being a distance corresponding to a fraction of pixels.

**FIG. 5**

**Description**

TECHNICAL FIELD

The present invention relates to an imaging device and a photosensor array for a light field imaging device.

BACKGROUND

Conventional cameras capture light from a three-dimensional scene on a two-dimensional sensor device sensitive to visible light. Light sensitive technology used in such imaging devices is often based on semiconductor technology, capable of converting photons into electrons such as, for example, charge coupled devices (CCD) or complementary metal oxide technology (CMOS). A digital image photosensor, for example, typically includes an array of photosensitive cells, each cell being configured to capture incoming light. A 2D image providing spatial information is obtained from a measurement of the total amount of light captured by each photosensitive cell of the image sensor device. While the 2D image can provide information on the intensity of the light and the colour of the light at spatial points of the photosensor(s), no information is provided on the direction of the incoming light.

Light field cameras (also known as radiance capturing cameras) can provide directional information on incoming light rays in additional to 2D spatial information. The directional information may be obtained by the use of an array of micro-lenses, often referred to as a microlens array (MLA) associated with an image sensor. A light field array camera, for example, is provided with a microlens array and a photosensor. A plenoptic camera is provided with a main lens focusing light on a MLA, and a photosensor associated with the MLA. In other configurations of light field cameras a plurality of cameras each provided with its own lens and sensor may be used to obtain light field data.

The information on the directional distribution of the light rays is typically referred to as light field data or 4D data. Since the information provides 4 parameters - two dimensional positional information and two dimensional angular information the directional distribution corresponds to a four-dimensional (4D) function

The light field data obtained can be processed for many applications, for example, to provide depth information on the captured scene, to provide depth maps from disparity, to generate 3D images or to generate refocused images of the scene

A shortcoming of images obtained from light field data is however the limitations on the spatial resolution. Re-focused images are computed from light-field data by projecting the 4D light-field pixels into a 2D image. The spatial resolution of a re-focused image is often less than the resolution of the photo sensor device which records the 4D light-field. For example, if a 10x10 array of viewpoints is captured on a photosensor of 60 x 60 pixel area, each viewpoint will correspond to a micro-image of 6x6 pixels. Some light field cameras provide an increase in resolution by a factor of up to 9 of these micro-images by techniques such as super-resolution. However, even with this improvement in spatial resolution, a significant loss in resolution is suffered.

Super-resolution is a desired feature for providing improved resolution in re-focused light field images and may be achieved when the projected 4D light-field pixels are interleaved in the re-focused image-pixels of a micro-image are interleaved with pixels of neighbouring micro-images. However super-resolution is available only for certain values of disparity w. Several approaches outline the advantage of super-resolution when projected pixels are interleaved. However such solutions do not apply for disparities w with {w} close to 0 or 1. The present invention has been devised with the foregoing in mind.

SUMMARY OF INVENTION

According to a first aspect of the invention there is provided a light field imaging device comprising: an array of micro lenses arranged in a regular lattice structure, a photosensor configured to capture light projected on the photosensor from the array of micro lenses, the photosensor comprising sets of pixels, each set of pixels being optically associated with a respective micro lens of the array of micro lenses; wherein pixels of at least one set of pixels are each shifted by a common displacement with respect to the regular lattice structure, the common displacement being a distance corresponding to a fraction of pixels.

The fraction of pixels may, for example, be defined as n/N where n and N are integers and n≠N

In an embodiment, the common displacement for a respective set of pixels is dependent upon the position of the set of pixels in the photosensor.

In an embodiment, the micro-lenses are arranged in a regular square lattice structure.

In an embodiment, pixels from adjacent microlens images are interleaved in accordance with a super-resolution factor.

In an embodiment, each group of pixels corresponds to a micro-image associated with the respective micro lens and the common displacement for a respective set of pixels is dependent upon the position of the respective micro image.

In an embodiment, the common displacement for a respective set of pixels is dependent upon the pixel size.

In an embodiment, the common displacement for a respective set of pixels is dependent upon the super resolution factor

In an embodiment, the common displacement for a respective set of pixels is dependent upon 1/*N* of pixels, *N* being the super resolution factor.

In an embodiment, the common displacement is dependent upon the expression

$$\frac{\delta}{N} k_n(i,j)$$

where $\delta$ defines the pixel size, N corresponds to the super-resolution factor; and $k_n$ corresponds to integer multiples of unit displacement vectors $\Delta$ (*i, j*), n being the index of the microimage

In an embodiment, the common displacement is dependent upon the expression

$$\left(\frac{\delta}{N} k_N\left(\left\lfloor\frac{i}{M}\right\rfloor,\left\lfloor\frac{j}{M}\right\rfloor\right),\frac{\delta}{N} l_N\left(\left\lfloor\frac{i}{M}\right\rfloor,\left\lfloor\frac{j}{M}\right\rfloor\right)\right)$$

where $\delta$ defines the pixel size, *N* corresponds to the super-resolution factor; $k_N$ and $l_N$; (*i, j*) correspond to the micro-image index; and M is
an integer.

In an embodiment, *M* = 1 in the case where no Color Filter Array is replicated on the array of micro-lenses.

In an embodiment, a Color Filter Array of size *M* × *M* is replicated on the array of micro-lenses.

In an embodiment, integer multiples $k_N$ and $l_N$ are given by

$$\begin{bmatrix} k_N(i,j) \\ l_N(i,j) \end{bmatrix} \equiv \begin{bmatrix} A & B \\ C & E \end{bmatrix} \begin{bmatrix} \lfloor i/M \rfloor \\ \lfloor j/M \rfloor \end{bmatrix} (\text{mod } N)$$

where *N* × *N* defines a sub-set of micro images and the values *A, B, C, E* are determined as a solution of the equation:

$$\gcd\left((a^2 + b^2)M^2 n^2 - (aA - bB + bC + aE)Mn + AE - BC, 1\right) = 1 \; \forall n \in [0, N[$$

where *a*, *b* and *M* are integer constants.

In an embodiment, a rotation $\theta$ of the array of microlenses relative to the array of pixels is defined by *tan$\theta$ = b/a.*

In an embodiment, *M* = 1 in the case where no Color Filter Array is replicated on the micro-lenses.

In an embodiment, a Color Filter Array of size *M* × *M* is replicated on the micro-lenses.

In an embodiment, integer multiples (k,l) of unit displacement vectors defining the common displacement are given by

$$\begin{bmatrix} k_N(i,j) \\ l_N(i,j) \end{bmatrix} \equiv \begin{bmatrix} A & B \\ C & E \end{bmatrix} \begin{bmatrix} \lfloor i/M \rfloor \\ \lfloor j/M \rfloor \end{bmatrix} (\text{mod } N)$$

where NxN defines a sub-set of micro images and the values A, B, C, E are determined as a solution of the equation:

$$\gcd\left((a^2 + b^2)n^2 - (aA - bB + bC + aE)n + AE - BC, 1\right) = 1 \; \forall n \in [0, N[$$

where a, and b are constants,

In an embodiment, the axes of the array of pixels of the photosensor array has an angular displacement $\theta$ relative to the axis of the array of microlenses, where tan $\theta$=b/a

In an embodiment, a micro image associated with a respective micro-lens has size of pxp pixels, the device further comprising a data readout device configured to read an image having a size of (p-1)x(p-1) pixels

According to a further aspect of the invention there is provided a photosensor for use with a light field imaging device, the light field imaging device being provided with an array of microlenses arranged in a regular lattice structure, the photosensor being arranged, in use, to capture light projected on the photosensor from the array of lenses, wherein the photosensor comprises sets of pixels, each set of pixels being optically associated with a respective micro lens of the array of micro lenses; and pixels of at least one set of pixels are each shifted by a common displacement with respect to the regular lattice, the common displacement being a distance corresponding to a fraction of pixels.

A further aspect of the invention provides an electronic device comprising memory, one or more processors; and one or more modules stored in the memory and configured for execution by the one or more processors, the one or more modules including instructions for determining the common displacement of the pixels of a set of pixels in accordance with embodiments of the invention.

A further aspect of the invention provides a computer readable memory including instructions, that when executed by a processor of a portable device, cause the device to perform operations comprising including instructions for determining the common displacement of the pixels of a set of pixels in accordance with embodiments of the invention..

Some processes implemented by elements of the invention may be computer implemented. Accordingly, such elements may take the form of an entirely hardware embodiment, an entirely software embodiment (including firmware, resident software, micro-code, etc.) or an embodiment combining software and hardware aspects that may all generally be referred to herein as a "circuit", "module" or "system'. Furthermore, such elements may take the form of a computer program product embodied in any tangible medium of expression having computer usable program code embodied in the medium.

Since elements of the present invention can be implemented in software, the present invention can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g. a microwave or RF signal.

BRIEF DESCRIPTION OF THE DRAWINGS

Embodiments of the invention will now be described, by way of example only, and with reference to the following drawings in which:

FIG. 1A is a schematic diagram of a light field camera according to a first embodiment of the invention;
FIG. 1B is a schematic diagram of a light field camera according to a second embodiment of the invention;
FIG. 2 is a functional diagram of a light field camera according to an embodiment of the invention;
FIG. 3 is an example of an example of a 2D light field image formed on a photosensor array;
FIG. 4A. and FIG. 4B schematically illustrate the geometric characteristics of a light-field plenoptic camera 400 assuming a perfect thin lens model; and
FIG. 5 schematically illustrates a photosensor array and micro lens array arrangement in accordance with a first embodiment of the invention
FIG. 6 schematically illustrates an example of a numeric image delivered by read out electronics with (p-1)x(p-1) pixels per micro-image;
FIG. 7 schematically illustrates an example of a numeric image delivered by read out electronics with pxp pixels per micro-image; and
FIG. 8 schematically illustrates a photosensor array and micro lens arrangement in accordance with a second embodiment of the invention

DETAILED DESCRIPTION

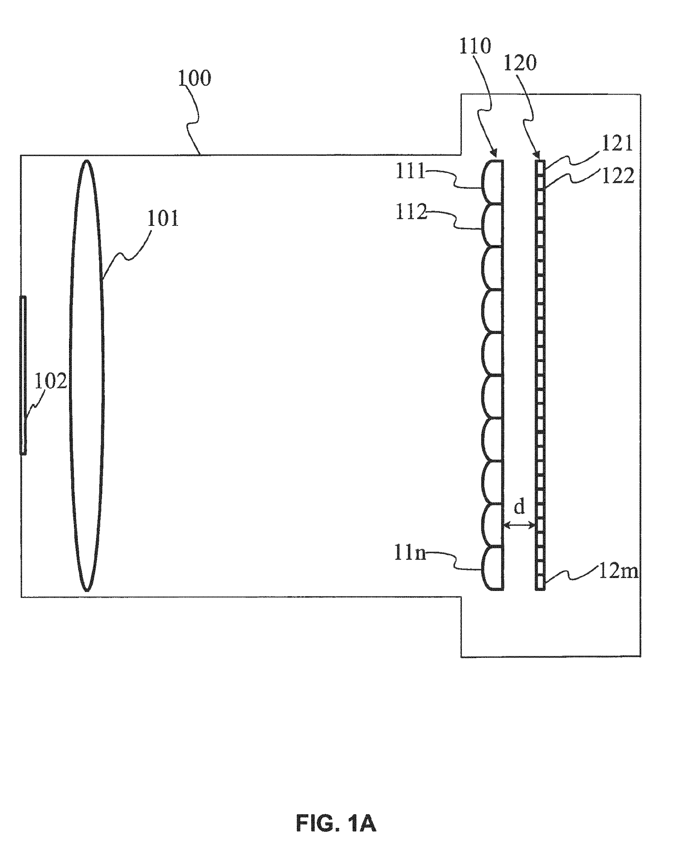

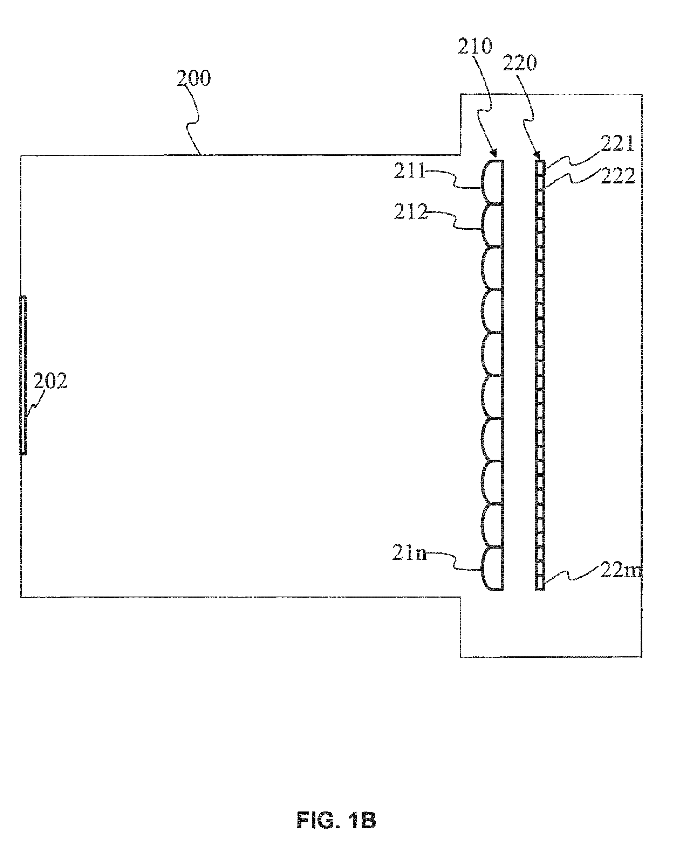

In embodiments of the invention light-field cameras are used to record a 4D light-field on a sensor composed of an array of pixels. The 4D data provides 2-dimensional spatial information and 2-dimensional angular information on incoming light. Such light-Field cameras can be for instance: a plenoptic camera 100 comprising a main lens 101, an array of lenses 110 and a photo sensor 120 as illustrated in Figure 1A; or a multi-camera array comprising an array of lenses 210 and a photosensor 220 without a main lens, as illustrated in Figure 1B. A multi-array camera may be considered as a particular case of a plenoptic camera where the mains lens has an infinite focal.

Figure 1A is a schematic diagram of a light field camera in which one or more embodiments of the invention may be implemented.

The light field camera 100 of Figure 1A is a plenoptic type light field camera comprising a micro lens array 110 and an image sensor 120 associated with the micro lens array 110. Further optics may be provided such as an aperture 102 for enabling a selectable amount of light to enter into the light field camera. The lens arrangement further includes a main (objective) lens 101 for focusing light towards the micro lens array 110.

The micro lens array 110 is composed of an array of microlenses 111, 112, 113...11n arranged, in a regular lattice structure. For example, the structure may be a rectangular lattice of rows and columns. The micro lens array may also be referred to as a lenslet array. For purposes of illustration, the microlens array 110 is shown with a relatively small number of microlenses, but it will be appreciated that the number of microlenses may reach up to several thousand or even several million microlenses.

Optionally, spacers might be placed around each micro lens of the micro-lens array 110 between the micro-lens array 110 and the photosensor 120 in order to prevent light from one micro lens from overlapping with light of other microlenses of the microlens array 110 at the photosensor 120.

The image sensor comprises a photosensor array 120 comprising a number m of photo sensors 121, 122, 123, 124.....12m arranged in a lattice structure. For example the structure may be a rectangular lattice of rows and columns.Each photosensor 121, 122, 123, 124.....12m corresponds to a pixel or a group of pixels of the raw image of the scene captured by the photosensor array 120, each pixel covering a part (also referred to as a point) of the scene. For purposes of illustration, the photosensor array 120 is illustrated as having a relatively small number of photosensors 121 to 121m. It will be appreciated, however, that, the number of photosensors is not limited to that illustrated in Figure 1A but may be extended to any number of photosensors, for example several thousand or several million photosensors. As an illustrative example, an image of 12.4 megapixels may be provided by an array of 4088x3040 pixels/photosensors. The image sensor may be for example a charge coupled device (CCD).

The microlenses 111, 112, 11n of the micro lens array 110 are arranged such that each microlens is optically associated with photosensors of the photo sensor array 120. The photosensor array 120 is generally of finer pitch than the microlens array. Accordingly, each microlens is associated with a plurality of photosensors of the photosensor array 120. Optical association between a microlens and a group of photosensors signifies that the light rays passing through a given microlens reach at least one of the group of photosensors optically associated with the given microlens.

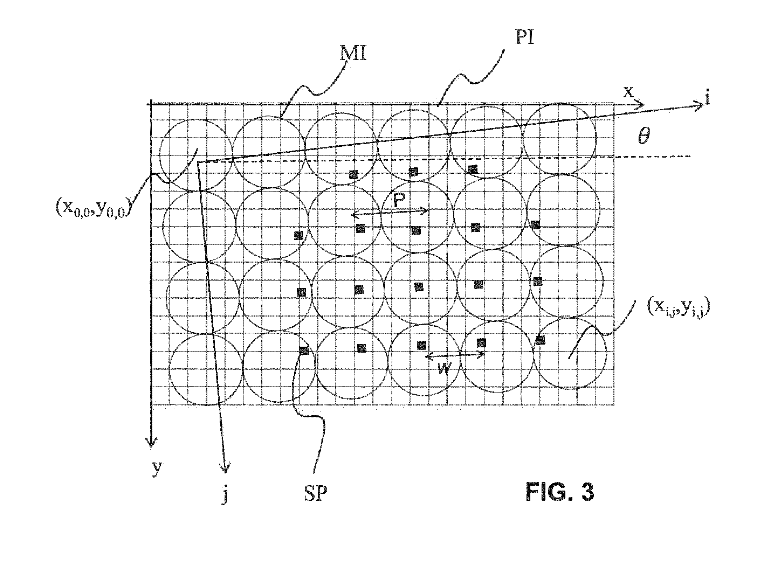

The interposition of the microlens array 110 between the main lens 101 and the photosensor 120 results in multiple images being formed on the photosensor array 120. Each microlens of the microlens array 110 projects a respective image, onto the associated photosensors of the photosensor array 120. Accordingly the raw image captured by the image sensor 120 is composed of an array of small images, as for example illustrated in Figure 3, typically referred to as micro-images. Each micro image corresponds to a micro-lens of the microlens array. The shape of the micro image is a function of the shape of the micro-lens, and is typically circular. Each pixel of photosensor 120 may be seen as corresponding to a 4D light field coordinate where two dimensions specify its spatial position on the sensor and two dimensions specify the angular or directional information of light that is incident upon that pixel according to the 2D position of the pixel within the microimage which it belongs to.

A color filter array (CFA) may in some embodiments of the invention be arranged on the microlens array 110. The CFA typically arranges RGB (Red, Green and Blue) color filters on the photosensor array, the RGB arrangement taking, for example, the form of a Bayer filter mosaic. One color filter (red, green or blue filter) may be associated with an MLA according to a predetermined pattern, comprising 50 % green, 25 % red and 25 % blue in the example of a Bayer filter, such a pattern also being referred to as a RGBG, GRGB or RGGB pattern. It will be appreciated that, the arrangement of the color filters on the microlens array 110 is not limited to a RGGB pattern. In other embodiments, the predetermined pattern may be a RGBE pattern with one of the green filters modified to 'Emerald' (for a block of four color filters); a CYYM pattern with one 'Cyan' filter, two 'Yellow' filters and one 'Magenta' filter (for a block of four color filters); a CYGM pattern with one 'Cyan' filter, one 'Yellow' filter, one 'Green' filter and one 'Magenta' filter; a RGBW pattern with one 'Red' filter, one 'Green' filter, one 'Blue' filter and one 'White' filter, several arrangement being possible (for example arranged on a block of four color filters with 'White' for the upper left filter, 'Red' for the upper right filter, 'Blue' for the lower left filter and 'Green' for the lower right filter; or arranged on a block of 4x4 color filters with 'White', 'Blue', 'White', 'Green' for the first line, 'Blue', 'White', 'Green', 'White' for the second line below the first line, 'White', 'Green', 'White', 'Red' for the third line below the second line and 'Green', 'White', 'Red', 'White' for the fourth line below the third line).

The gap between the microlens array and the photosensor array may be composed of air, of an optical material having an index n (for example a glass layer) or of multiple layers comprising at least one layer air layer and at least one optical material layer. Using a glass layer to form the gap has the advantages of keeping the microlens array 110 at a constant distance from the photosensor array 120 uniformly across the photosensor array 120 and of reducing this distance when needed. If d is the distance between the output of the microlens array 110 and the photosensor array 120 along a longitudinal axis, having a layer composed of an optical material with an index n (n > 1, for example n = 1.5) between the micro lens array 110 and the photosensor array 120 enables the distance to be set to d/n without modifying the distance d. By adapting/modifying the index of the optical material of the layer forming the gap, it is possible to adapt/modify a parameter representative of the distance between the microlens array 110 and the photosensor array 120 without modifying the distance d.

Figure 1B is a schematic diagram of a light field camera according to a second embodiment of the invention.

The light field camera 200 according to the second embodiment of the invention is a multi-camera array type light field camera comprising a micro lens array 210 and an image sensor 220 associated with the micro lens array 210. Further optics may be provided such as an aperture 202 for enabling a selectable amount of light to enter into the light field camera. In this embodiment he a main lens 201 for focusing light towards the micro lens array 210 is not present. Elements such as the photosensor array 220 and micro lens array 210 operate in a similar manner to the corresponding elements of the plenoptic type camera of Figure 1A. The main difference is that the main lens is not present in the embodiment of Figure 1B.

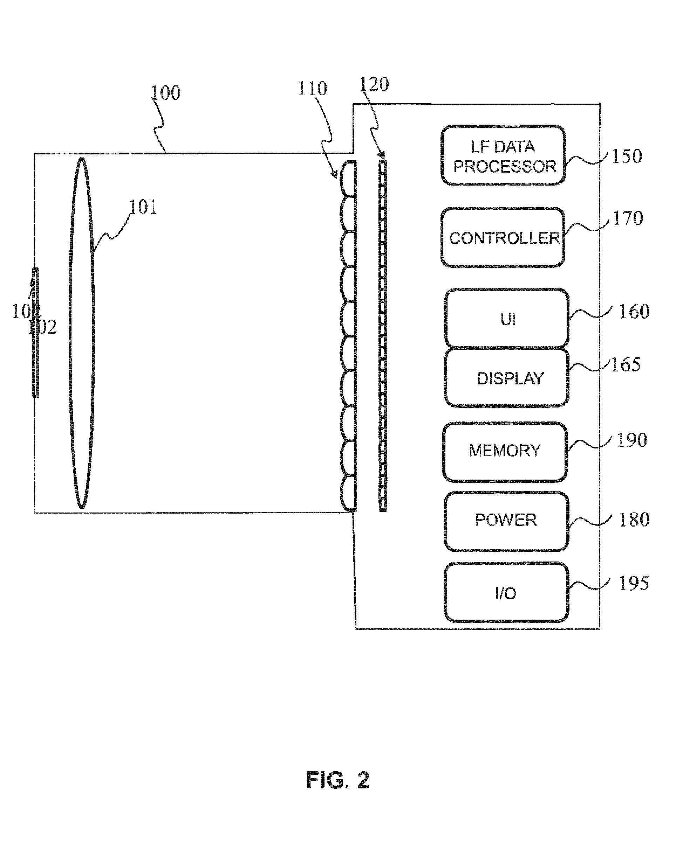

Figure 2 is a functional block diagram of a light field camera device in accordance with an embodiment of the invention. The light field camera comprises an aperture/shutter 102, a main (objective) lens 101, a micro lens array 110 and a photosensor array 120 in accordance with the light field camera of Figure 1A. In some embodiments the light field camera includes a shutter release that is activated to capture a light-field image of a subject or scene. It will be appreciated that the functional features may also be applied to the light field camera of Figure 1B.

The photosensor array 120 provides light field image data for processing by a light field data processor 150.

In the illustrated example, the light field data processor 150 is disposed in or integrated into the light field camera 100. In other embodiments of the invention the light field data processor 150 may be provided in a separate processing component external to the light field capture camera. The separate processing component may be local or remote with respect to the light field image capture device. It will be appreciated that any suitable wired or wireless protocol may be used for transmitting light field image data to the processor 150; for example the light field data processor may transfer captured light field image data and/ or other data via the Internet, a cellular data network, a WiFi network, a BlueTooth communication protocol, and/ or any other suitable means.

Generally, the light field data processor 150 operates on light field image data received from the photosensor array 120, to generate an output, such as, for example, still images, 2D video streams, and the like. The light field data processor 150 is configured to process the captured light field data in accordance with embodiments of the invention to generate an image of a captured since from a readout of the photosensor array comprising displaced groups of pixels. The light field data processor may be implemented in software, hardware or a combination thereof.

In at least one embodiment, light field camera 100 may also include a user interface 160 for enabling a user to provide user input to control operation of camera 100 by controller 170. Control of the camera may include one or more of control of optical parameters of the camera such as shutter speed, or in the case of an adjustable light field camera, control of the relative distance between the microlens array and the photosensor, or the relative distance between the objective lens and the microlens array. In some embodiments the relative distances between optical elements of the light field camera may be manually adjusted. Control of the camera may also include control of other light field data acquisition parameters or light field processing parameters of the camera. The user interface 160 may comprise any suitable user input device(s) such as a touchscreen, buttons, keyboard, pointing device, and/ or the like. In this way, input received by the user interface can be used to control and/ or configure either the processor 150 for controlling the processing of the acquired light field data and controller 170 for controlling the light field camera 100.

The light field camera includes a power source 180, such as one or more replaceable or rechargeable batteries. The light field camera comprises memory 190 for storing captured light-field data and/or rendered final images or other data such as software for implementing methods of embodiments of the invention. The memory can include external and/ or internal memory. In at least one embodiment, the memory can be provided at a separate device and/ or location from camera 100. In one embodiment, the memory includes a removable/swappable storage device such as a memory stick.

The light field camera may include a display unit 165 (e.g., an LCD screen) for viewing scenes in front of the camera prior to capture and/or for viewing previously captured and/or rendered images. The screen 165 may also be used to display one or more menus or other information to the user. The light field camera may further include one or more I/O interfaces 195, such as FireWire or Universal Serial Bus (USB) interfaces, for transferring data, e.g. captured light-field images, software updates, and so on, to and from external devices such as computer systems or even other cameras.

Figure 3 illustrates an example of a 2D image formed on the photosensor array 120 of Figure 1A or the photosensor array 220 of Figure 1B. The image is composed of an array of micro images MI, each micro image being produced by the respective micro lens $(i, j)$ of the microlens array 110,210. The micro images are arranged in the array in a rectangular lattice structure defined by axes $i$ and $j$. A micro lens image is referenced by the respective micro lens co-ordinates $(i, j)$. A pixel PI of the photosensor 120, 220 is referenced by its spatial co-ordinates $(x,y)$. The 4D data associated with a given pixel is referenced $(x, y, i, j)$.

$p$ represents the distance, in pixels, between two consecutive micro-lens image centers. The distance $p$ between two consecutive micro-lens images is typically greater than the pixel size $\delta$. The center of a micro-lens image $(i, j)$ is located on the photosensor 120 at coordinate $(x_{i,j}, y_{i,j})$. $\theta$ is the relative angle between the lattice of the array of pixels of the photo sensor 120 and the lattice of the array of micro-lenses 110. The spatial co-ordinate $(x_{i,j}, y_{i,j})$ of a micro-image may be expressed as a function of the following parameters: micro-image inter-distance p, relative lattice angle $\theta$, and the pixel coordinates $(x_{0,0}, y_{0,0})$ of the centre of micro-lens image (0,0):

$$\begin{bmatrix} x_{i,j} \\ y_{i,j} \end{bmatrix} = p \begin{bmatrix} \cos\theta & -\sin\theta \\ \sin\theta & \cos\theta \end{bmatrix} \begin{bmatrix} i \\ j \end{bmatrix} + \begin{bmatrix} x_{0,0} \\ y_{0,0} \end{bmatrix} \qquad (1)$$

Figure 3 illustrates how a same captured scene point, represented by dark squares SP is simultaneously visible on a plurality of micro-lens images. The distance $w$, in pixels, between the corresponding imaging points of the same scene point SP in two adjacent micro-images on the photosensor 120 is referred to as disparity. The disparity w depends on the depth of the point in the scene being captured, i.e. the distance between the scene point and the camera. A scene point located at a distance z from the camera is observed on several images at a disparity w.

A same object or scene point is captured on r consecutive micro-lens images in one dimension. The replication factor $r$ assuming that the micro-images are contiguous, may be expressed as:

$$r = \left\lfloor \frac{p}{|p-w|} \right\rfloor \qquad (2)$$

r is the number of consecutive micro-lens images in one dimension (in units of $i$) in which an object appears. An object is captured in $r^2$ micro-lens images, considering both dimensions $i$ and $j$ of the photosensor array 120.

Disparity $w$ of a captured object and the distance $p$ between two adjacent micro-lens images are given in units of pixels. These units may be converted into distances in metres, becoming $W = w\delta$ and $P = p\delta$.

In order to obtain a 2D image from the 4D light field data, the micro images are shifted by a given disparity and added together form a single 2D image.

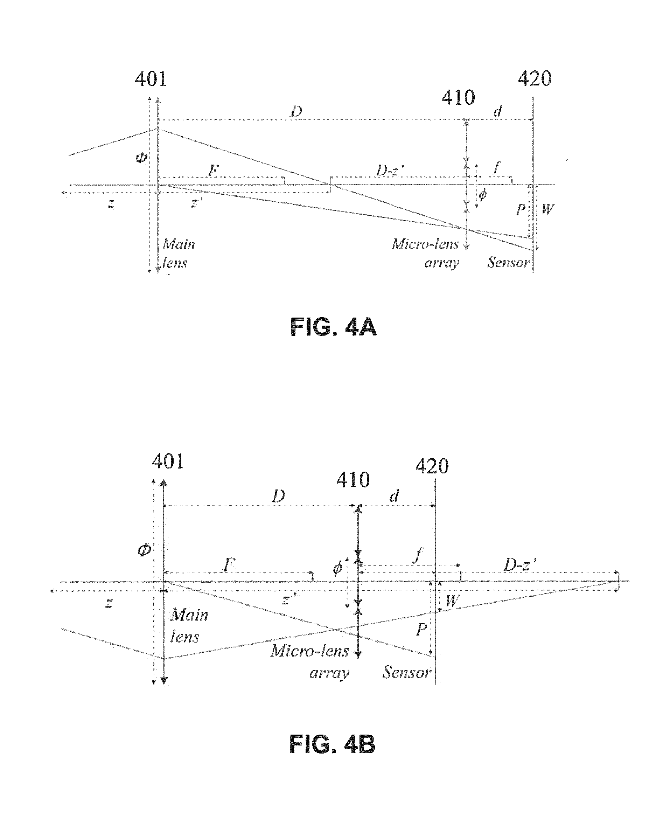

Figures 4A and 4B schematically illustrate the geometric characteristics of a light-field plenoptic camera 400 assuming a perfect thin lens model. The plenoptic camera comprises a main lens 401, a micro-lens array 410 and a photosensor 420. The main-lens 401 has a focal length $F$ and an aperture of diameter $\Phi$. The micro-lens array 410 comprises micro-lenses having a focal length $f$. The pitch of the micro-lens array is $\phi$. The micro-lens array 410 is located at a distance $D$ from the main-lens 401, and a distance $d$ from the photosensor 420.

A given scene point or object located at a distance z from the main lens 401 is focused by the main lens at a distance $z''$ from the main lens 401 and then re-imaged a number of times according to replication factor $r$ by the lenses of the micro-lens array 410.

Figures 4A and 4B illustrate the cases where $D > z'$ and $D < z'$ respectively. In both cases, micro-lens images can be in focus depending on the distance $d$ between the micro lens array 410 and the photosensor 420 and focal length $f$ of the micro-lenses.

The disparity $W$ varies with the distance z of the object or scene point from the main lens (object depth). Mathematically from the thin lens equation:

$$\frac{1}{z} + \frac{1}{z'} = \frac{1}{F} \qquad (3)$$

And Thales law:

$$\frac{D-z'}{\phi} = \frac{D-z'+d}{W} \qquad (4)$$

From equations (3) and (4) a relationship between the disparity W and depth z of the object in the scene may be deduced as follows:

$$W = \phi \left( 1 + \frac{d}{D - \frac{zF}{z - F}} \right) \qquad (5)$$

The relation between the disparity $W$ of the corresponding views and the depth z of the object in the scene is determined from geometrical considerations and does not assume that the micro-lens images are in focus.

The disparity of an object which is observed in focus is given as: $W_{focus} = \phi d / f$

In practice micro-lens images may be tuned to be in focus according by adjusting parameters d and D according to the thin lens equation:

$$\frac{1}{D - z'} + \frac{1}{d} = \frac{1}{f} \qquad (6)$$

A micro lens image observed on a photosensor of an object located at a distance z from the main lens appears in focus as long as the circle of confusion is smaller than the pixel size. In practice the range $[Z_m, Z_M]$ of distances z which enables micro images to be observed in focus is large and may be optimized depending on the focal length $f$, the apertures of the mains lens and the microlenses and the distances $D$ and $d$.

From the Thales law $P$ may be derived

$$e = \frac{D + d}{D} \qquad (7)$$

$$P = \phi e$$

The ratio e defines the enlargement between the micro-lens pitch and the pitch of the micro-lens images projected on the photosensor. This ratio is typically close to 1 since $D \gg d$.

To compute a 2D image from 4D light field data, the micro-images captured on the photosensor 120 are zoomed, shifted according to a given disparity and summed into a 2D image.

An important feature of a light-field camera is the ability to change the focal distance after capture of the images to compute images having different focal distances. Indeed the focalization distance is freely adjustable after the capture of the 4D light field data of the scene. The amount of shift corresponding to a given disparity controls the re-focalization distance.

The projection of a 4D light field pixel (x, y, i, j) i.e. a given pixel (x, y) of the photosensor associated with micro lens (i, j) into a re-focused 2D image at coordinate (X, Y) is defined as:

$$\begin{bmatrix} X \\ Y \end{bmatrix} = sg \left( \begin{bmatrix} x \\ y \end{bmatrix} - \begin{bmatrix} x_{i,j} \\ y_{i,j} \end{bmatrix} \right) + s \begin{bmatrix} x_{i,j} \\ y_{i,j} \end{bmatrix} \qquad (8)$$

s controls the size of the 2D re-focused image, and g controls the focalization distance of the re-focused image. g is dependent upon the selected disparity for which the re-focused image is computed. The pixel value at spatial location (x, y) is projected into the 2D refocused image using common image interpolation techniques.

Due to the regularity of the positions of the centres of the micro-lens images, equation (8) can be rewritten, considering equation (1), as:

$$\begin{bmatrix} X \\ Y \end{bmatrix} = sg \begin{bmatrix} x \\ y \end{bmatrix} + sp(1 - g) \begin{bmatrix} \cos \theta & -\sin \theta \\ \sin \theta & \cos \theta \end{bmatrix} \begin{bmatrix} i \\ j \end{bmatrix} + s(1 - g) \begin{bmatrix} x_{0,0} \\ y_{0,0} \end{bmatrix} \qquad (9)$$

The parameter g can be expressed as function of inter micro-image distance p and disparity w by applying simple geometry. g is the zoom to be performed on the micro-lens images, using their centers as reference, such that the various zoomed views of the same objects are superimposed on one another. g is then expressed as follows:

$$g = \frac{p}{p - w} \qquad (10)$$

This relation may be used to select the depth $z$ of the objects in focus in the projected image. The value of $g$ may be negative depending on the light-field camera design.

Equation (9) becomes:

$$\begin{bmatrix} X \\ Y \end{bmatrix} = sg \begin{bmatrix} x \\ y \end{bmatrix} - sgw \begin{bmatrix} \cos\theta & -\sin\theta \\ \sin\theta & \cos\theta \end{bmatrix} \begin{bmatrix} i \\ j \end{bmatrix} + \frac{sgw}{p} \begin{bmatrix} x_{0,0} \\ y_{0,0} \end{bmatrix} \qquad (11)$$

4D light-field pixels are projected into a 2D image. The distribution of the projected pixels defines the resolution of the re-focused image, and varies with the disparity w, causing the resolution of the re-focused image to vary. The distribution of the projected 4D light-field pixels into the 2D re-focused coordinate $(X, Y)$ may be evaluated by considering $\theta = 0$, $sg = 1$ and $(x_{0,0}, y_{0,0}) = (0,0)$. In this particular case, equation (11) becomes:

$$\begin{bmatrix} X \\ Y \end{bmatrix} = \begin{bmatrix} x \\ y \end{bmatrix} - w \begin{bmatrix} i \\ j \end{bmatrix} \qquad (12)$$

By nature, co-ordinate $(x, y)$ is expressed in integers. The distribution of the projected coordinate $(X, Y)$ depends on the fractional part $\{w\}$ of the disparity $w$. Indeed, if $\{w\} = 0$ then $(X, Y)$ can only have integer values, in this case, the 4D light-field pixels from various micro-lens images overlap on the re-focused image. The projected coordinates define a perfect sampling with a constant sampling step equal to $H = sg$. In this case, on average $r^2$ pixels fall at the same coordinate $(X, Y)$, the projected pixels are said to be clustered. On the contrary, if $\{w\} \neq 0$ then $(X, Y)$ takes various non-integer values causing the 4D light-field pixels to be projected into distinct 2D coordinates. From this latter case, it is considered that $\{w\} = n/N$ where $n$ and $N$ are positive integers such that $0 \leq n \leq N \leq r$. The projected coordinates define a perfect sampling with a constant sampling step equal to $H = sg \gcd(n, N)/N$. If $N = r$ and $\gcd(n, r) = 1$ then one obtains the smallest $H = sg/r$. For this sampling step, none of the input pixels $(x, y)$ are overlapped in the projected image $(X, Y)$.

The resolution of the re-focused image is often significantly lower than the photo sensor which records the 4D light-field. Super-resolution is a technique used to increase the resolution of re-focused images. Super-resolution may be obtained easily when the projected 4D light-field pixels are ideally interleaved in the re-focused image with the smallest sampling step $H$.

For example a pixel p1 of the photosensor, associated with a first microlens 110_1 of the microlens array 110 samples radiance within a certain angle from a first spatial region of the main lens image, and another pixel P2 associated with a second microlens 110_2 samples radiance within a certain angle from a second spatial region of the main lens image which partially overlaps the first spatial region. A sub-pixel shift between the corresponding micro-lens is applied to form the re-focused image.

However super-resolution becomes difficult to compute (without prior knowledge of the scene) when projected 4D light-field pixels are overlapped or clustered. The ability of performing super-resolution by means of pixel interleaving is function of $1/H$. $H$ evolves cyclically with disparity $w$ within the range of re-focalization. Super-resolution is thus only applicable for certain values of $w$. Several conventional approaches outline the advantages of super-resolution when projected pixels are interleaved. However, these solutions do not apply for disparities $w$ with $\{w\}$ close to 0 or 1. Accordingly embodiments of the invention, as described herein, set out to address the issue of super-resolution

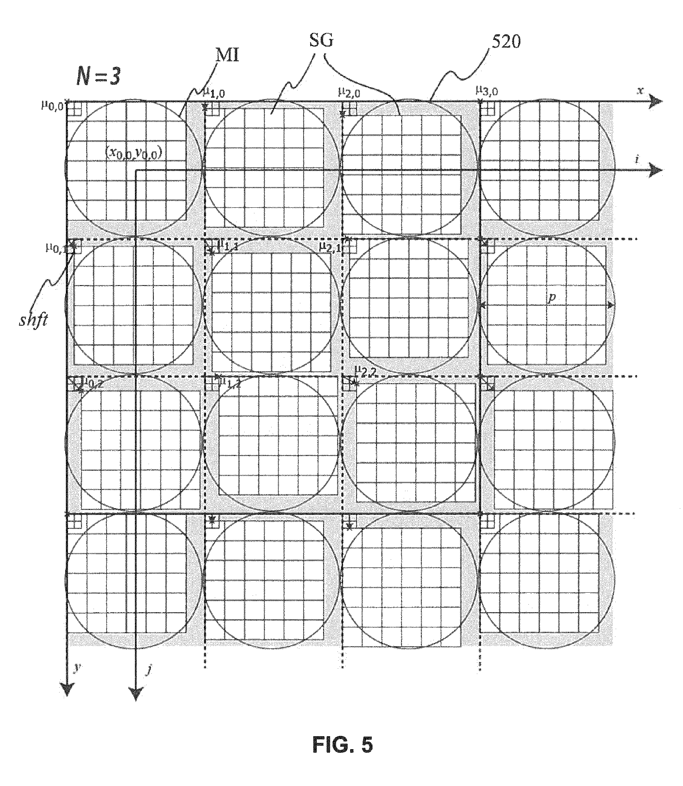

Figure 5 illustrates an MLA array 510 and a photosensor array 520 in accordance with a first embodiment of the invention. An array of micro-images MI, corresponding to the array of micro lenses 510 are arranged with respect to a regular rectangular lattice. NxN defines a sub-set of micro lenses 510 corresponding to a super resolution factor N. For example a super-resolution factor of 3 indicates that each microlens image interleaves pixels from its 8 nearest neighbours. Sub-groups of pixels SG of the photosensor array of a given micro-image optically corresponding to a given micro-lens are displaced by a fraction of pixels $shft$ i.e. by a sub-pixel distance with respect to the regular lattice structure of the micro-image array. The amplitude of the displacements $shft$ of a given sub-group of pixels are computed such that the micro-lens images are displaced by sub-pixel offsets i.e. by $n/N$ pixels in $x$ and $y$ directions, where $n$ and $N$ are integers and $n/N$ represents a fraction where $n \neq N$. The displacement $shft$ of each sub-group of pixels is dependent upon the corresponding micro-image indices $(i, j)$

A sub-group of pixels are pixels which belong to the same micro-lens image $(i, j)$ (of size $p \times p$) and which share the same regular rectangular lattice of pitch $\delta$. Pixels $(x, y, i, j)$ are shifted by $(\Delta_x(i,j), \Delta_y(i,j))$. Equation (11) defining projection of 4D light field data onto 2D pixels $(X, Y)$ of a refocused image is modified to include the pixel shifts to become:

$$\begin{bmatrix} X \\ Y \end{bmatrix} = sg \begin{bmatrix} x + \Delta_x(i,j) \\ y + \Delta_y(i,j) \end{bmatrix} - sgw \begin{bmatrix} \cos\theta & -\sin\theta \\ \sin\theta & \cos\theta \end{bmatrix} \begin{bmatrix} i \\ j \end{bmatrix} + \frac{sgw}{p} \begin{bmatrix} x_{0,0} \\ y_{0,0} \end{bmatrix} \qquad (13)$$

Equation (13) is simplified by considering $u = sg$ and discarding the initial position $(x_{0,0}, y_{0,0})$ of the first micro image. This position does not impact the computation of the shifts $(\Delta_x(i,j), \Delta_y(i,j))$ but may be considered later to characterize the pixel matrix.

$$\begin{bmatrix} X \\ Y \end{bmatrix} = u \begin{bmatrix} x + \Delta_x(i,j) \\ y + \Delta_y(i,j) \end{bmatrix} - uw \begin{bmatrix} \cos\theta & -\sin\theta \\ \sin\theta & \cos\theta \end{bmatrix} \begin{bmatrix} i \\ j \end{bmatrix} \qquad (14)$$

Disparity w and the rotation matrix are transformed by posing w = $cw'$ with c being a real constant such that $a = c \cos\theta$ and $b = c \sin\theta$:

$$\begin{bmatrix} X \\ Y \end{bmatrix} = u \begin{bmatrix} x \\ y \end{bmatrix} - uw' \begin{bmatrix} a & -b \\ b & a \end{bmatrix} \begin{bmatrix} i \\ j \end{bmatrix} + u \begin{bmatrix} \Delta_x(i,j) \\ \Delta_y(i,j) \end{bmatrix} \qquad (15)$$

Moving a sub-group of pixels $(i, j)$ of a micro-image in accordance with embodiments of the invention enables more optimal micro-image interleaving to be obtained for any disparity having the form $w' = \lfloor w' \rfloor + n/N$ where $N$ is a positive integer, and $n$ is any integer such that $n \in [0, N[$.

$$\begin{bmatrix} X' \\ Y' \end{bmatrix} = \frac{N}{u} \begin{bmatrix} X \\ Y \end{bmatrix} = N \begin{bmatrix} x \\ y \end{bmatrix} - (N\lfloor w' \rfloor + n) \begin{bmatrix} a & -b \\ b & a \end{bmatrix} \begin{bmatrix} i \\ j \end{bmatrix} + N \begin{bmatrix} \Delta_x(i,j) \\ \Delta_y(i,j) \end{bmatrix} \qquad (16)$$

$(X', Y')$ are normalized projected coordinates such that they are integers for optimal sampling of the projected coordinates $(X, Y)$. For optimal sampling $k_N(i,j) = N\Delta_x(i,j)$ and $l_N(i,j) = N\Delta_y(i,j)$ should also be integers. It may be noted that these shifts are independent of the disparity w. Thus the shifts applied to the groups of pixels are computed without approximation. Moreover in order to have integer coordinates $(X', Y')$, a and b are integers. Since $\theta = \arctan(b/a)$, only specific rotation angles are compatible with a perfect sampling.

To determine the functions $k_N(i,j)$ and $l_N(i,j)$ the modulo $N$ of equation (16) is considered. modulo $N$ of equation (16) becomes:

$$\begin{bmatrix} X' \\ Y' \end{bmatrix} \equiv -n \begin{bmatrix} a & -b \\ b & a \end{bmatrix} \begin{bmatrix} i \\ j \end{bmatrix} + \begin{bmatrix} k_N(i,j) \\ l_N(i,j) \end{bmatrix} (\bmod N) \qquad (17)$$

The coordinate $(X', Y')(\bmod N)$ takes all possible values within $[0, N]^2$ whatever the value of $n$. To solve the previous equation the linear solution is considered:

$$\begin{bmatrix} k_N(i,j) \\ l_N(i,j) \end{bmatrix} \equiv \begin{bmatrix} A & B \\ C & E \end{bmatrix} \begin{bmatrix} i \\ j \end{bmatrix} (\bmod N) \qquad (18)$$

Where $A$, $B$, $C$ and $E$ are integers to be defined.

Taking M, representing the color filter array size, into account equation (18) may be given as:

$$\begin{bmatrix} k_N(i,j) \\ l_N(i,j) \end{bmatrix} \equiv \begin{bmatrix} A & B \\ C & E \end{bmatrix} \begin{bmatrix} \lfloor i/M \rfloor \\ \lfloor j/M \rfloor \end{bmatrix} (\bmod N)$$

Equation (17) becomes:

$$\begin{bmatrix} X' \\ Y' \end{bmatrix} \equiv \begin{bmatrix} A - na & B + nb \\ C - nb & E - na \end{bmatrix} \begin{bmatrix} i \\ j \end{bmatrix} (\bmod N) \qquad (19)$$

The Determinant $s(n)$ of the previous system of equations is equal to:

$$s(n) = (a^2 + b^2)n^2 - (aA - bB + bC + aE)n + AE - BC \qquad (20)$$

To have a solution the determinant equation (19) is prime with $N$ for any values of $n \in [0, N[$ or in other words:

$$\gcd\left((a^2 + b^2)n^2 - (aA - bB + bC + aE)n + AE - BC, 1\right) = 1 \; \forall n \in [0, N[ \qquad (21)$$

Experimental values of $A, B, C, E$ are valid for a given set of $N, a, b$ (with $\theta = $ atan $b/a$).gcd indicates the greatest common divisor. An optimal interleaved projection of the 4D light-field pixels sampling is ensured only for disparities $w = c(\lfloor w/c \rfloor + n/N)$ with $c = \sqrt{a^2 + b^2}$. It is preferable to choose small values of c such that a larger set of disparity values $w$ are associated with an optimal interleaved projection. The best choice of $c$ may for example be $c = 1, c = \sqrt{2}$ and $c = \sqrt{5}$. These 3 values of c permit the following angles $\theta$

**Table 1**

| c | a | b | $\theta$ |
|---|---|---|---|
| 1 | 1 | 0 | 0° |
| $\sqrt{5}$ | 2 | 1 | 26.56° |
| $\sqrt{2}$ | 1 | 1 | 45° |
| $\sqrt{5}$ | 1 | 2 | 63.43° |
| 1 | 0 | 1 | 90° |

From the $N^4$ possible values that the set $A, B, C, E$ can take, some follow equation (21). The following table indicates sets of $A, B, C, E$ values which are in agreement with equation (21) for various values of $N, a, b$ corresponding to the most common cases:

**Table 2**

| a | b | N | $\theta$ | A | B | C | E | a | b | N | $\theta$ | A | B | C | E |
|---|---|---|---|---|---|---|---|---|---|---|---|---|---|---|---|
| 1 | 0 | 2 | 0° | 0 | 1 | 1 | 1 | 1 | 1 | 2 | 45° | 0 | 1 | 1 | 0 |
| 1 | 0 | 3 | 0° | 0 | 1 | 1 | 1 | 1 | 1 | 3 | 45° | 0 | 1 | 1 | 0 |
| 1 | 0 | 4 | 0° | 0 | 1 | 1 | 1 | 1 | 1 | 4 | 45° | 0 | 1 | 1 | 0 |
| 1 | 0 | 5 | 0° | 0 | 1 | 1 | 2 | 1 | 1 | 5 | 45° | 0 | 1 | 1 | 0 |
| 1 | 0 | 6 | 0° | 0 | 1 | 1 | 1 | 1 | 1 | 6 | 45° | 0 | 1 | 1 | 0 |
| 1 | 0 | 7 | 0° | 0 | 1 | 1 | 1 | 1 | 1 | 7 | 45° | 0 | 1 | 1 | 2 |
| 1 | 0 | 8 | 0° | 0 | 1 | 1 | 1 | 1 | 1 | 8 | 45° | 0 | 1 | 1 | 0 |
| 1 | 0 | 9 | 0° | 0 | 1 | 1 | 1 | 1 | 1 | 9 | 45° | 0 | 1 | 1 | 0 |
| 1 | 0 | 10 | 0° | 0 | 1 | 1 | 3 | 1 | 2 | 10 | 45° | 0 | 1 | 1 | 0 |
| 2 | 1 | 2 | 26.56° | 1 | 0 | 1 | 1 | 1 | 2 | 2 | 63.43° | 0 | 1 | 1 | 1 |
| 2 | 1 | 3 | 26.56° | 0 | 1 | 1 | 0 | 1 | 2 | 3 | 63.43° | 0 | 1 | 1 | 0 |
| 2 | 1 | 4 | 26.56° | 1 | 0 | 1 | 1 | 1 | 2 | 4 | 63.43° | 0 | 1 | 1 | 1 |
| 2 | 1 | 5 | 26.56° | 0 | 1 | 1 | 0 | 1 | 2 | 5 | 63.43° | 0 | 1 | 1 | 0 |

(continued)

| a | b | N | $\theta$ | A | B | C | E | a | b | N | $\theta$ | A | B | C | E |
|---|---|---|---|---|---|---|---|---|---|---|---|---|---|---|---|
| 2 | 1 | 6 | 26.56° | 1 | 0 | 1 | 1 | 1 | 2 | 6 | 63.43° | 0 | 1 | 1 | 3 |
| 2 | 1 | 7 | 26.56° | 0 | 1 | 1 | 0 | 1 | 2 | 7 | 63.43° | 0 | 1 | 1 | 0 |
| 2 | 1 | 8 | 26.56° | 1 | 0 | 1 | 1 | 1 | 2 | 8 | 63.43° | 0 | 1 | 1 | 1 |
| 2 | 1 | 9 | 26.56° | 0 | 1 | 1 | 0 | 1 | 2 | 9 | 63.43° | 0 | 1 | 1 | 0 |
| 2 | 1 | 10 | 26.56° | 1 | 0 | 1 | 1 | 1 | 2 | 10 | 63.43° | 0 | 1 | 1 | 5 |
| 0 | 1 | 2 | 90° | 1 | 0 | 1 | 1 | | | | | | | | |
| 0 | 1 | 3 | 90° | 1 | 0 | 0 | 1 | | | | | | | | |
| 0 | 1 | 4 | 90° | 1 | 0 | 1 | 1 | | | | | | | | |
| 0 | 1 | 5 | 90° | 1 | 0 | 0 | 2 | | | | | | | | |
| 0 | 1 | 6 | 90° | 1 | 0 | 1 | 5 | | | | | | | | |
| 0 | 1 | 7 | 90° | 1 | 0 | 0 | 1 | | | | | | | | |
| 0 | 1 | 8 | 90° | 1 | 0 | 1 | 1 | | | | | | | | |
| 0 | 1 | 9 | 90° | 1 | 0 | 0 | 1 | | | | | | | | |
| 0 | 1 | 10 | 90° | 1 | 1 | 0 | 1 | | | | | | | | |

Pixel shift amplitudes $(\Delta_x(i,j), \Delta_y(i,j))$ are characterized by $N$, $k_N(i,j)$ and $l_N(i,j)$ and may be expressed in pixel units. The shift in physical units $(\overline{\Delta_x}(i,j),\overline{\Delta_y}(i,j))$ are computed by multiplying $(\Delta_x(i,j),\Delta_y(i,j))$ with the pixel pitch $\delta$. In the case where $\theta$ = 0, the top-left coordinates $\mu_{i,j}$ of a sub-group of pixels (indicated by an X in Figure 5) after being shifted are equal to:

$$\begin{cases} \mu_i & = & \delta \left\lfloor p + \frac{1}{2} \right\rfloor i + \frac{\delta}{N} k_N(i,j) + \delta x_{0,0} - \delta \frac{p}{2} \\ \mu_j & = & \delta \left\lfloor p + \frac{1}{2} \right\rfloor j + \frac{\delta}{N} l_N(i,j) + \delta y_{0,0} - \delta \frac{p}{2} \end{cases} \qquad (22)$$

Where [$p$] indicates the fractional part of $p$. Since $p$ (corresponding to the size of a micro-lens image in pixels) is not necessarily an integer, the fractional part function is used. In the case where $p$ is equal to an integer value, the term ⌊$p$ + 1/2⌋ is equal to $p$. The sub-group of pixels is made of ([$p$] - 1) $\times$ (⌊$p$⌋ - 1) pixels. The "lost" pixels i.e. p-(p-1) are for the shifts. Figure 5 illustrates a physical layout of shifted pixels for: $p$ = 7 (pixels); $N$ = 3 (3 $\times$ 3 sub-groups of pixels are shifted according to equation (22); $x_{0,0} = y_{0,0} = p/2$ (pixels).

The photosensor 120,220 comprises a grid of pixels including shifted groups of pixels in accordance with embodiments of the invention. This special grid of shifted pixel groups may be easily manufactured since microelectronics technology achieves integrated circuit design at a level of 20 nano-metre precision. Between micro-images, there are empty spaces due to the sub-group shifts (shaded areas on Figure 5). These empty spaces are discarded, no photons are collected. Nevertheless, connection of the pixels to the electronic read-out converter is organized such that the sub-group of pixels are read as if they were not micro-shifted among themselves. These empty spaces of pixels do not impact the sampling of the micro-images; since the lost areas are located at the borders of the micro-lens images, and it is common to discard microlens image boundaries because of strong vignetting. Moreover, the lost areas could be used for other features like for instance IR pixels for depth-sensing or any other utilisation.

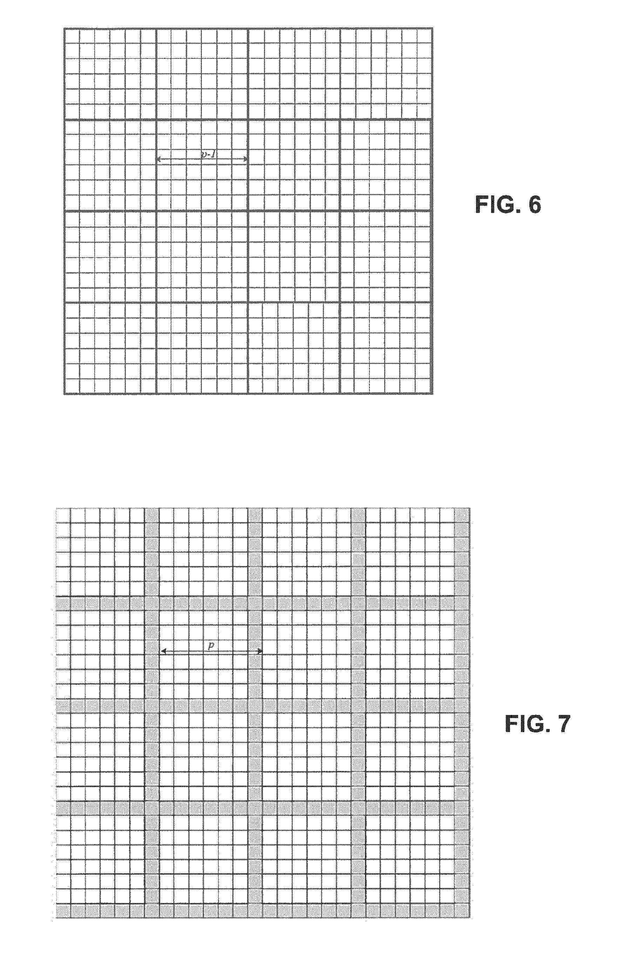

With a read out connection configuration which connects sub-groups of pixels as if there were no shift, the read out electronics reads an image of (p-1)$\times$(p-1) pixels per micro-lens image as illustrated in Figure 6. To process this image and having the proper dimensions of $p \times p$ pixels per micro-lens image, the digital image can be expanded with the discarded pixels as illustrated in Figure 7.

The design has the advantages that the amount of shift deigned for a sub-group of pixels is accurate for any disparity w and does not depend on the focal $F$ of the main-lens and the focal $f$ of the micro-lenses. The only relation between the shifted pixel design and the micro-lens array is that the size of the sub-group of pixels should be roughly equal to $\phi$ the pitch of the micro-lens array. It is worth noting that the proposed shifted pixel design applies to a sensor having no Color Filter Array (CFA) covering pixels or micro-lenses. The pixels of the sensor are assumed to capture either a single component (and thus recording a grey level image) or several colour components like Red, Green, Blue.

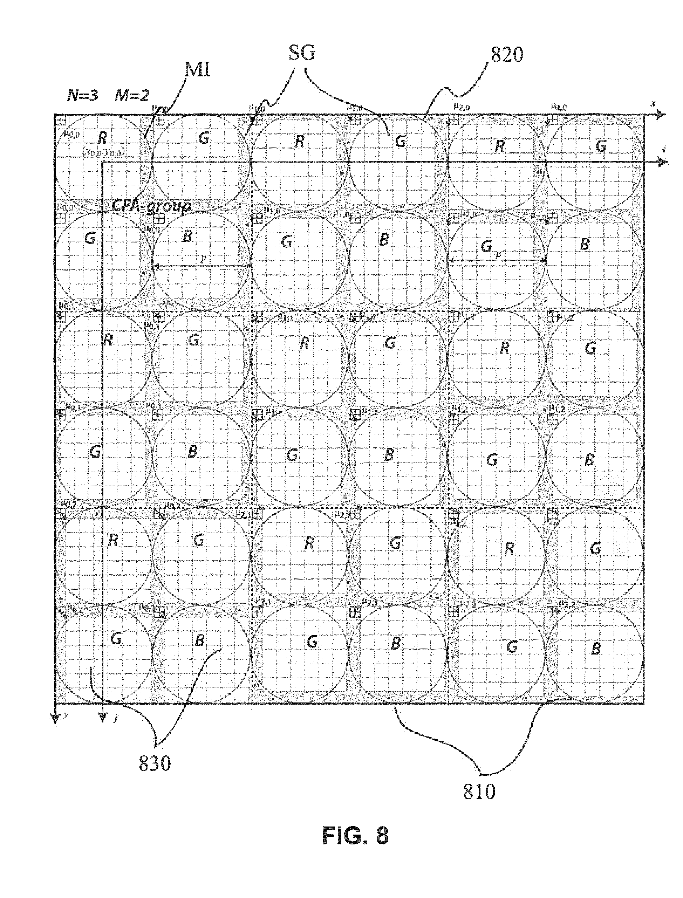

The pixel shifts described with respect to the first embodiment of the invention as illustrated in Figure 5 assumes that the sensor is either black and white (one component per pixel) or color (typically 3 colors component per pixel). It will be appreciated that the invention may be also applied to a light field camera in which a Color Filter Array (CFA) is mounted on the micro-lens array. Figure 8 schematically illustrates the arrangement of an image sensor 820 and a MLA 810 in accordance with a second embodiment of the invention. In the second embodiment of the invention a CFA 830 is mounted on the micro-lens array 810.

A CFA is defined by $M \times M$ filters. Each filter is associated with the coordinate $(\alpha, \beta)$ where $(\alpha, \beta) \in [0, M[^2$. An example of a well-known CFA is the so-called Bayer filter with M = 2 comprising $2 \times 2$ filters. The 4 colors being Red, Green, Green, Red (in lexicographic order).

The arrangement of the second embodiment sets out to provide refocused images with perfect interleaving (as for the previous embodiment for disparities having the form $w' = \lfloor w' \rfloor + n/N$) and also refocused images such that each refocused coordinate $(X, Y)$ receives at least $M^2$ 4D light-field pixels having all possible colors from the CFA.

The CFA 830 is mounted on the micro-lens array 810. By definition the filter $(\alpha, \beta)$ depends on the micro-lens coordinate $(i, j)$ such that $(\alpha, \beta) = (i \bmod M, j \bmod M)$. This equation can be reversed by posing $(i',j') = (\lfloor i/M \rfloor, \lfloor j/M \rfloor)$ where $\lfloor . \rfloor$ denotes the floor function:

$$\begin{bmatrix} i \\ j \end{bmatrix} = M \begin{bmatrix} i' \\ j' \end{bmatrix} + \begin{bmatrix} \alpha \\ \beta \end{bmatrix} \qquad (23)$$

coordinate $(i',j')$ encompass $M \times M$ micro-lenses which define a CFA-group of micro-lenses. $(\alpha, \beta)$ is the coordinate within the CFA-group.

Pixels $(x, y, i, j)$ are shifted by $(\Delta_x(i',j'), \Delta_y(i',j'))$ to be determined. Equation (11) is modified to include the pixel shifts, and becomes:

$$\begin{bmatrix} X \\ Y \end{bmatrix} = sg \begin{bmatrix} x + \Delta_x(i',j') \\ y + \Delta_y(i',j') \end{bmatrix} - sgw \begin{bmatrix} \cos\theta & -\sin\theta \\ \sin\theta & \cos\theta \end{bmatrix} \begin{bmatrix} i \\ j \end{bmatrix} + \frac{sgw}{p} \begin{bmatrix} x_{0,0} \\ y_{0,0} \end{bmatrix} \qquad (24)$$

The same mathematical justifications which operate from equation (11) to equation (17) are applied to equation (24) which becomes considering equation (18).

$$\begin{bmatrix} X' \\ Y' \end{bmatrix} \equiv -n \begin{bmatrix} a & -b \\ b & a \end{bmatrix} \begin{bmatrix} i \\ j \end{bmatrix} + \begin{bmatrix} A & C \\ B & E \end{bmatrix} \begin{bmatrix} i' \\ j' \end{bmatrix} \pmod{N} \qquad (25)$$

Replacing equation (23) in equation (25) one deduces:

$$\begin{bmatrix} X' \\ Y' \end{bmatrix} \equiv - \begin{bmatrix} A - nMa & B + nMb \\ C - nMb & E - nMa \end{bmatrix} \begin{bmatrix} i' \\ j' \end{bmatrix} + n \begin{bmatrix} a & -b \\ b & a \end{bmatrix} \begin{bmatrix} \alpha \\ \beta \end{bmatrix} \pmod{N} \qquad (26)$$

The second term of equation (26) just plays a translation role which does not depend on the lens index $(i',j')$. To have a solution the determinant equation (25) should be prime with $N$ for any values of $n \in [0, N[$ or in other words:

$$\gcd\big((a^2 + b^2)M^2 n^2 - (aA - bB + bC + aE)Mn + AE - BC, 1\big) = 1 \; \forall n \in [0, N[ \qquad (27)$$

From the $N^4$ possible values that the set $A, B, C, E$ can take, some are following the equation (27) and can be easily estimated testing the $N^4$ solutions.

The shifts amplitude $(\Delta_x(i',j'), \Delta_y(i',j'))$ are fully characterized by $N$, $k_N(i',j')$ and $l_N(i',j')$. They are expressed in pixel unit. The shift in physical units $(\overline{\Delta_x}(i',j'), \overline{\Delta_y}(i',j'))$ are computed by multiplying $(\Delta_x(i',j'), \Delta_y(i',j'))$ with the pixel pitch $\delta$. In the case where $\theta = 0$, the top-left coordinates $\mu_{i,j}$ of a sub-group of pixels (indicated by a cross in Figure 8) are equal to:

$$\begin{cases} \mu_i = \delta \left\lfloor p + \dfrac{1}{2} \right\rfloor i + \dfrac{\delta}{N} k_N \left( \left\lfloor \dfrac{i}{M} \right\rfloor, \left\lfloor \dfrac{j}{M} \right\rfloor \right) + \delta x_{0,0} - \delta \dfrac{p}{2} \\ \mu_j = \delta \left\lfloor p + \dfrac{1}{2} \right\rfloor j + \dfrac{\delta}{N} l_N \left( \left\lfloor \dfrac{i}{M} \right\rfloor, \left\lfloor \dfrac{j}{M} \right\rfloor \right) + \delta y_{0,0} - \delta \dfrac{p}{2} \end{cases} \qquad (28)$$

The micro-lenses are covered by the $M^2$ color filters which define the CFA filter. Figure 8 illustrates exemplary shifts performed on the sub-group of pixels associated with a micro-lens for the case where $\theta = 0$, $N = 3$ and $M = 2$ with the famous Bayer filter. The filters located on the micro-lenses are referenced as R, G or B for the Red, Green and Blue filters.

In embodiments of the invention by virtue of the shifted pattern of pixels the greatest distance between two consecutive projected pixels is divided by $N$ which defines the average possible super resolution factor of the refocused image almost independently of disparity $\{w\}$.

Embodiments of the invention address the problem of clustered projected light-field pixels for any disparity having the form $w = \lfloor w \rfloor + n/N$ ($N$ fixed and $n < N$). The proposed solution is exact and no approximation is required to compute the shifts.

Although the present invention has been described hereinabove with reference to specific embodiments, the present invention is not limited to the specific embodiments, and modifications will be apparent to a skilled person in the art which lie within the scope of the present invention.

Many further modifications and variations will suggest themselves to those versed in the art upon making reference to the foregoing illustrative embodiments, which are given by way of example only and which are not intended to limit the scope of the invention, that being determined solely by the appended claims. In particular the different features from different embodiments may be interchanged, where appropriate.

**Claims**

1. A light field imaging device comprising:

   an array of micro lenses arranged in a regular lattice structure;
   a photosensor configured to capture light projected on the photosensor from the array of micro lenses, the photosensor comprising sets of pixels, each set of pixels being optically associated with a respective micro lens of the array of micro lenses;
   wherein pixels of at least one set of pixels are each shifted by a common displacement with respect to the regular lattice structure, the common displacement being a distance corresponding to a fraction of pixels.

2. A light field imaging device according to claim 1, wherein the common displacement for a respective set of pixels is dependent upon the position of the set of pixels in the photosensor.

3. A light field imaging device according to claim 1 or 2, wherein pixels from adjacent microlens images are interleaved in accordance with a superresolution factor

4. A light field imaging device according to any preceding claim, wherein each group of pixels corresponds to a micro-image associated with the respective micro lens and the common displacement for a respective set of pixels is dependent upon the position of the respective micro image.

5. A light field imaging device according to any preceding claim, wherein the common displacement for a respective set of pixels is dependent upon the pixel size.

6. A light field imaging device according to any preceding claim, wherein the common displacement for a respective set of pixels is dependent upon the super resolution factor.

7. A light imaging device according to claim 6, wherein the common displacement for a respective set of pixels is dependent upon 1/$N$ of pixels, $N$ being the super resolution factor.

8. A light field imaging device according to any preceding claim, wherein the common displacement is dependent upon the expression

$$\left(\frac{\delta}{N} k_N\left(\left\lfloor\frac{i}{M}\right\rfloor, \left\lfloor\frac{j}{M}\right\rfloor\right), \frac{\delta}{N} l_N\left(\left\lfloor\frac{i}{M}\right\rfloor, \left\lfloor\frac{j}{M}\right\rfloor\right)\right)$$

where $\delta$ defines the pixel size, $N$ corresponds to the super-resolution factor, ($i$, $j$) are the micro-image index; $k_N(\lfloor i/M\rfloor, \lfloor j/M\rfloor)$ and $l_N(\lfloor i/M\rfloor, \lfloor j/M\rfloor)$ are integers depending on the micro-image index ; and M isan integer.

9. A light field imaging device according to claim 8, wherein M = 1 in the case where no Color Filter Array is replicated on the array of micro-lenses.

10. A light field imaging device according to claim 8, wherein a Color Filter Array of size $M \times M$ is replicated on the array of micro-lenses.

11. A light field imaging device according to any one of claims 8 to 10, wherein integer multiples $k_N$ and $l_N$ are given by

$$\begin{bmatrix} k_N(i,j) \\ l_N(i,j) \end{bmatrix} \equiv \begin{bmatrix} A & B \\ C & E \end{bmatrix} \begin{bmatrix} \lfloor i/M \rfloor \\ \lfloor j/M \rfloor \end{bmatrix} (\mathrm{mod}\ N)$$

where $N \times N$ defines a sub-set of micro images and the values $A, B, C, E$ are determined as a solution of the equation:

$$\mathrm{gcd}\left((a^2 + b^2)M^2n^2 - (aA - bB + bC + aE)Mn + AE - BC, 1\right) = 1\ \forall n \in [0, N[$$

where $a$, $b$ and $M$ are integer constants.

12. A light field imaging device according to claim 11, wherein a rotation $\theta$ of the array of microlenses relative to the array of pixels is defined by $tan\theta$ = $b$/$a$.

13. A light field imaging device according to claim 11 or 12, wherein a Color Filter Array of size $M \times M$ is replicated on the micro-lenses and wherein $M$ = 1 in the case where no Color Filter Array is replicated on the micro-lenses..

14. A light field imaging device according to any preceding claim, wherein a micro image associated with a respective micro-lens has size of $p \times p$ pixels, the device further comprising a data readout device configured to read an image having a size of ($p$ - 1) $\times$ ($p$ - 1) pixels

15. A light field imaging device according to any preceding claim wherein the micro-lenses are arranged in a regular square lattice structure.

**FIG. 1A**

**FIG. 1B**

**FIG. 2**

FIG. 3

**FIG. 4A**

**FIG. 4B**

FIG. 5

FIG. 6

FIG. 7

**FIG. 8**

Europäisches
Patentamt

European
Patent Office

Office européen
des brevets

# EUROPEAN SEARCH REPORT

**Application Number**

EP 14 30 6851

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 505 954 A (CANON KK [JP]) 19 March 2014 (2014-03-19) | 1-4,6,7, 14,15 | INV. G02B27/00 |
| A | * figures 1,8,9,11,13 *<br>* page 32 - page 34 *<br>* page 22, line 1 - line 16 *<br>* page 22, line 17 - page 24, line 19 *<br>* page 24, line 20 - line 24 * | 5,8-13 | G02B13/16 G02B3/00 H04N5/232 |
| X | GB 2 501 936 A (CANON KK [JP]) 13 November 2013 (2013-11-13) | 1-4,6 | |
| A | * page 15 - page 20 *<br>* page 23, last paragraph - page 24 *<br>* figure 9 * | 5,7-15 | |
| X | GB 2 505 955 A (CANON KK [JP]) 19 March 2014 (2014-03-19) | 1-4,6 | |
| A | * page 23, last paragraph - page 24 *<br>* page 22, last paragraph - page 23, last paragraph *<br>* page 25, paragraph 2 - page 36, line 29 *<br>* figures 9,12,13 * | 5,7-15 | |
| X | US 2013/128087 A1 (GEORGIEV TODOR G [US] ET AL) 23 May 2013 (2013-05-23) | 1-4,6 | TECHNICAL FIELDS SEARCHED (IPC)<br><br>G02B<br>H04N |
| A | * paragraph [0079] - paragraph [0090] *<br>* paragraph [0107] - paragraph [0111] *<br>* paragraph [0159] - paragraph [0167] *<br>* figures 3,4,5,9, 42A * | 5,7-15 | |
| X | US 8 315 476 B1 (GEORGIEV TODOR G [US] ET AL) 20 November 2012 (2012-11-20) | 1 | |
| A | * column 26, line 19 - column 27, line 3 *<br>* figures 31, 32 * | 2-15 | |

The present search report has been drawn up for all claims

| Place of search | Date of completion of the search | Examiner |
|---|---|---|
| Munich | 29 April 2015 | von Hentig, Roger |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 30 6851

This annex lists the patent family members relating to the patent documents cited in the above-mentioned European search report.
The members are as contained in the European Patent Office EDP file on
The European Patent Office is in no way liable for these particulars which are merely given for the purpose of information.

29-04-2015

| Patent document cited in search report | | Publication date | Patent family member(s) | | Publication date |
|---|---|---|---|---|---|
| GB 2505954 | A | 19-03-2014 | NONE | | |
| GB 2501936 | A | 13-11-2013 | GB | 2501936 A | 13-11-2013 |
| | | | GB | 2501950 A | 13-11-2013 |
| | | | WO | 2013167758 A1 | 14-11-2013 |
| GB 2505955 | A | 19-03-2014 | NONE | | |
| US 2013128087 | A1 | 23-05-2013 | NONE | | |
| US 8315476 | B1 | 20-11-2012 | NONE | | |

EPO FORM P0459

For more details about this annex : see Official Journal of the European Patent Office, No. 12/82